# EUROPEAN PATENT APPLICATION

(11) **EP 3 754 340 A1**
(43) Date of publication of application: **23.12.2020**
(21) Application number: 19754666.6
(22) Date of filing: 15.02.2019
(51) Int. Cl.: G01N 35/08, G01N 21/05, G01N 21/15, G01N 37/00

(54) **FLOW PATH DEVICE AND MEASUREMENT APPARATUS**

(30) Priority: 16.02.2018 JP 2018026266
(71) Applicant: Kyocera Corporation, Fushimi-ku, Kyoto-shi, Kyoto 612-8501 (JP)
(72) Inventor: MASUDA, Yuji, Kyoto-shi, Kyoto 612-8501 (JP); YONETA, Masashi, Kyoto-shi, Kyoto 612-8501 (JP)
(74) Representative: Viering, Jentschura & Partner mbB Patent- und Rechtsanwälte
(86) International application number: PCT/JP2019/005501
(87) International publication number: WO 2019/160072

(57) **Abstract**

A flow path device according to the present disclosure includes: a first substrate having a pair of first main surfaces and including a groove with an opening, which is located in one of the pair of first main surfaces, and a first recessed portion with another opening, which is located in another one of the pair of first main surfaces, the first recessed portion overlapping the groove; and a second substrate having a pair of second main surfaces, one of the pair of second main surfaces being located on a side of the one of the pair of first main surfaces of the first substrate to cover the opening of the groove. It is preferable that the second substrate further includes a second recessed portion including another opening located in another one of the pair of second main surfaces and overlapping the groove.

## Description

### TechnicalField

The present invention relates to a flow path device and a measurement apparatus.

### Background Art

Conventionally known is a measurement of a concentration of microparticles contained in a fluid using a flow path device (for example, refer to Japanese Patent Application Laid-Open No. 2009-168487).

### Summary

### Problem to be Solved by the Invention

In such a measurement apparatus, an improvement of a measurement accuracy is required.

### Means to Solve the Problem

A flow path device according to the present disclosure comprises: a first substrate having a pair of first main surfaces and including a groove with an opening, which is located in one of the pair of first main surfaces, and a first recessed portion with another opening, which is located in another one of the pair of first main surfaces, the first recessed portion overlapping the groove; and a second substrate having a pair of second main surfaces, one of the pair of second main surfaces being located on a side of the one of the pair of first main surfaces of the first substrate to cover the opening of the groove.

A measurement apparatus according to the present disclosure comprises the flow path device described above and an optical sensor facing the flow path device.

### Effects of the Invention

According to the flow path device and the measurement apparatus in the present disclosure, a measurement accuracy can be improved in measuring a concentration of microparticles using the flow path device.

### Brief Description of Drawings

[Fig. 1] A top view illustrating an example of a measurement apparatus according to an embodiment of the present invention.
[Fig. 2] A cross-sectional view illustrating an example of the measurement apparatus according to the embodiment of the present invention.
[Fig. 3] A drawing illustrating an example of a measurement method according to the embodiment of the present invention.
[Fig. 4] A cross-sectional view illustrating a part of an example of the measurement apparatus according to the embodiment of the present invention.
[Fig. 5] A cross-sectional view illustrating a part of an example of the measurement apparatus according to the embodiment of the present invention.
[Fig. 6] A cross-sectional view illustrating a part of an example of the measurement apparatus according to the embodiment of the present invention.
[Fig. 7] A cross-sectional view illustrating a part of an example of the measurement apparatus according to the embodiment of the present invention.
[Fig. 8] A top view illustrating a part of an example of the measurement apparatus according to the embodiment of the present invention.
[Fig. 9] A bottom view illustrating a part of an example of the measurement apparatus according to the embodiment of the present invention.
[Fig. 10] A top view illustrating a part of an example of the measurement apparatus according to the embodiment of the present invention.
[Fig. 11] A bottom view illustrating a part of an example of the measurement apparatus according to the embodiment of the present invention.

### Description of Embodiments)

Examples of a flow path device and a measurement apparatus according to embodiments of the present invention are described with reference to the drawings. In the present disclosure, a rectangular coordinate system (X, Y, Z) is defined for descriptive purposes to define a positive side in a Z axis direction as an upper side, however, in the present invention, any direction may be the upper side or a lower side.

### (Measurement apparatus)

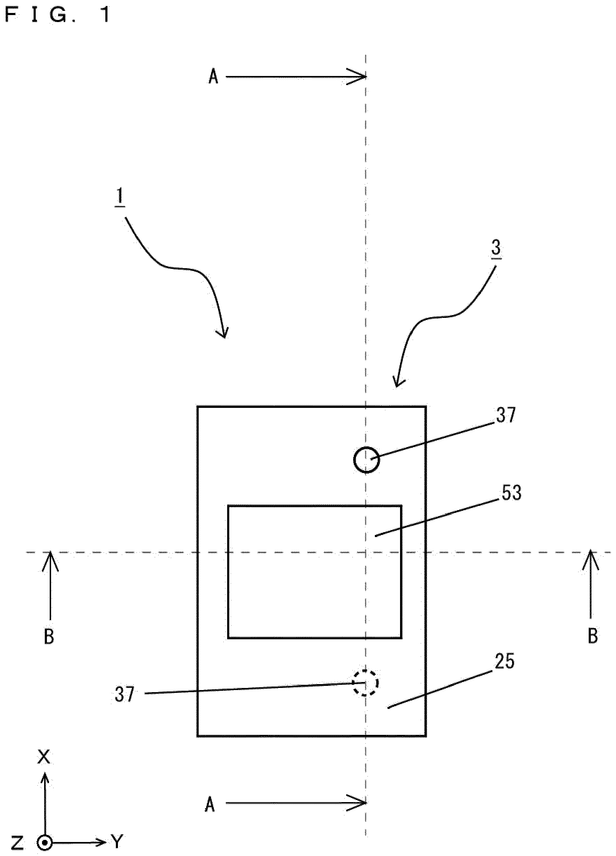

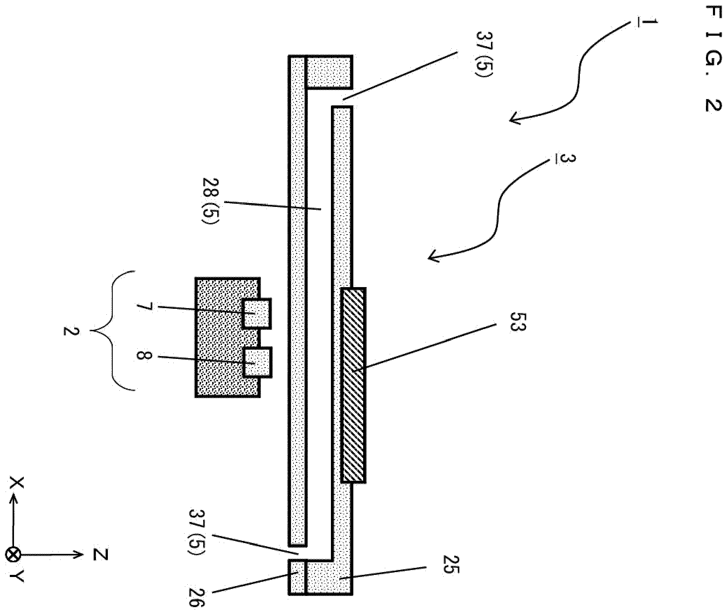

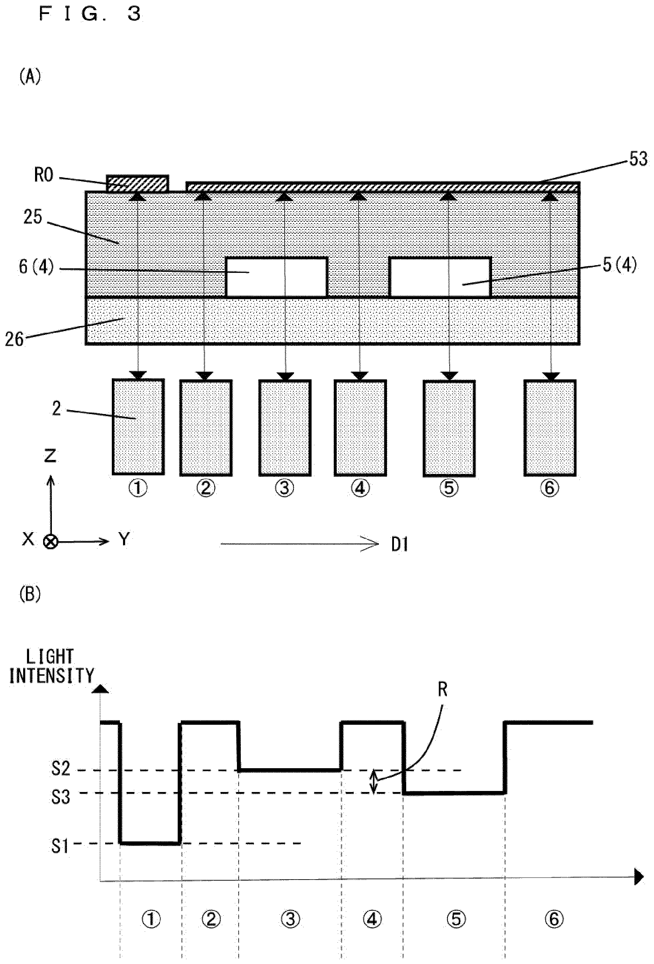

Fig. 1 to Fig. 3 schematically illustrate an example of a measurement apparatus 1. Fig. 1 is a top view of the measurement apparatus 1, and Fig. 2 is a cross-sectional view of the measurement apparatus 1 cut along an A-A line in Fig. 1. Fig. 3(a) is a schematic cross-sectional view of the measurement apparatus 1 cut along a B-B line illustrated in Fig. 1. Fig. 3(b) is a drawing describing a system of the measurement.

The measurement apparatus 1 can measure specific particles (microparticles) in a fluid. The measurement apparatus 1 includes an optical sensor 2 and a flow path device 3. The flow path device 3 includes a flow path 4 inside, and a fluid (liquid) flows in the flow path 4. The optical sensor 2 is disposed to face the flow path device 3, and can irradiate the fluid flowing in the flow path 4 with light and receive light passing through the fluid. As a result, the number or concentration of the particles in the fluid can be estimated and measured based on an output of the optical sensor 2.

More specifically, when the fluid flowing in the flow path 4 is irradiated with the light from the optical sensor 2, the light passing through the fluid is diffused or absorbed by a component of the fluid, and an intensity of light decreases. Accordingly, a standard curve indicating a relationship between a sample including particles, the number or concentration of which is already known, and an attenuation amount of the light is previously prepared, and the standard curve and the light intensity in the fluid obtained from the sample including specific particles to be measured are compared with each other, thus the number or concentration of the specific particles can be measured.

The flow path device 3 is a device including the measurement flow path 4 for measuring first particles in a first fluid. The flow path 4 in the flow path device 3 according to the present disclosure includes a first flow path 5 and a second flow path 6. The first fluid including the particles (first particles) to be measured flows in the first flow path 5. A fluid (second fluid) which does not include the first particles flows in the second flow path 6. In other words, the first flow path 5 is a flow path for measurement, and the second flow path 6 is a flow path for correction. The first fluid is a sample, and may be a fluid or the like from which specific microparticles such as white blood cells (leucocytes) are extracted from blood or the like, for example. The second fluid is a fluid for correction, and a saline solution or the like can be applied, for example.

The optical sensor 2 can sense the first particles. The optical sensor 2 includes a light-emitting element 7 and a light receiving element 8. The optical sensor 2 irradiates each of the first flow path 5 and the second flow path 6 with light from the light-emitting element 7, and receives the light passing through each of the first flow path 5 and the second flow path 6 in the light receiving element 8 in the measurement.

The measurement apparatus 1 compares an intensity of the light (first light) passing through the first flow path 5 and an intensity of the light (second light) passing through the second flow path 6, which of which is obtained by the optical sensor 2, thereby being able to measure the number or concentration of the first particles. That is to say, the measurement apparatus 1 calculates a difference of intensity between the first light and the second light, and compares the difference of intensity between the first light and the second light with the standard curve, thereby being able to measure the number or concentration of the first particles.

Particularly, as illustrated in Fig. 3(a) and Fig, 3(b), the optical sensor 2 firstly measures the intensity of the light in a non-reflection region R0, and outputs a reference signal S1. Next, the optical sensor 2 measures an intensity of light passing through the second flow path 6 (in the present disclosure, a reflection light from a mirror member 53 disposed on an upper side of the second flow path 6), and outputs a correction signal S2. Next, the optical sensor 2 measures an intensity of light passing through the first flow path 5 (in the present disclosure, a reflection light from a mirror member 53 disposed on an upper side of the first flow path 5), and outputs a measurement signal S3. Calculated next is a measurement value R (= (S2-S1) - (S3-S1) = S2-S3) obtained by subtracting a difference between the measurement signal S3 and the reference signal S1 (S3-S1) from a difference between the correction signal S2 and the reference signal S1 (S2-S1). Then, the measurement value R and the standard curve which is previously prepared are compared, thus the number or concentration of the first particles can be estimated and measured. As described above, the number or concentration of the first particles are measured in accordance with the difference of intensity between the first light and the second light, thus a measurement accuracy can be improved free of a deterioration of an optical element (the light-emitting element 7 and the light receiving element 8).

As described above, the flow path device 3 in the present disclosure may include a non-reflection region R0. The non-reflection region R0 indicates a part of the flow path device 3 where the first flow path 5 and the second flow path 6 are not located and a region where the mirror 53 is not disposed in a top view. The non-reflection region R0 can be used as a standard in the measurement by the optical sensor 2. The light intensity in the non-reflection region R0 is used as a standard, thus an influence of noise occurring at the time of using the optical sensor 2 can be reduced. An influence of a fluctuation in a signal intensity due to a deterioration of the optical element (the light-emitting element 7 and the light receiving element 8) in the optical sensor 2 can be reduced. A non-reflection cloth, for example, can be disposed as the non-reflection region R0.

Each constituent element is described in detail hereinafter.

### (Optical sensor)

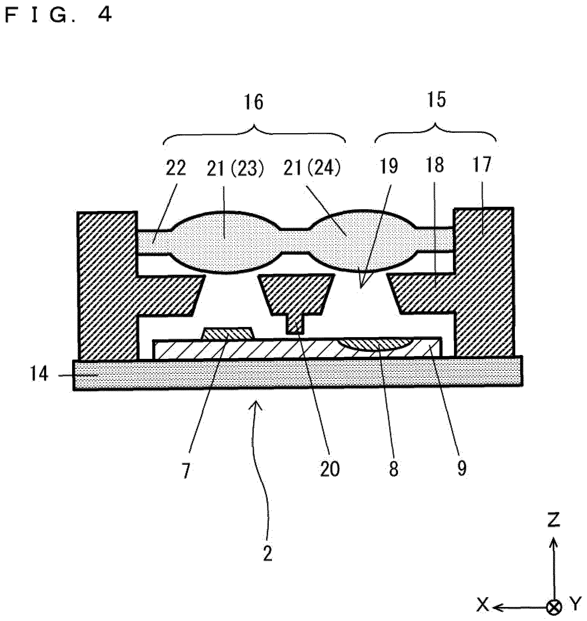

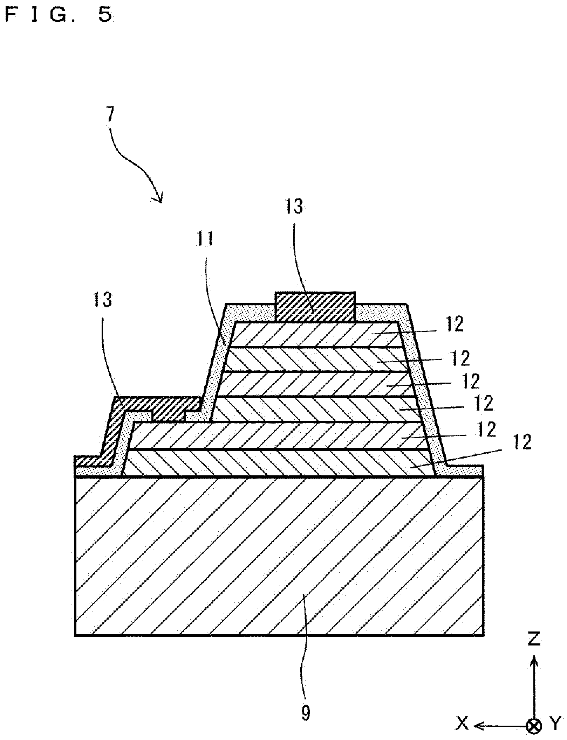

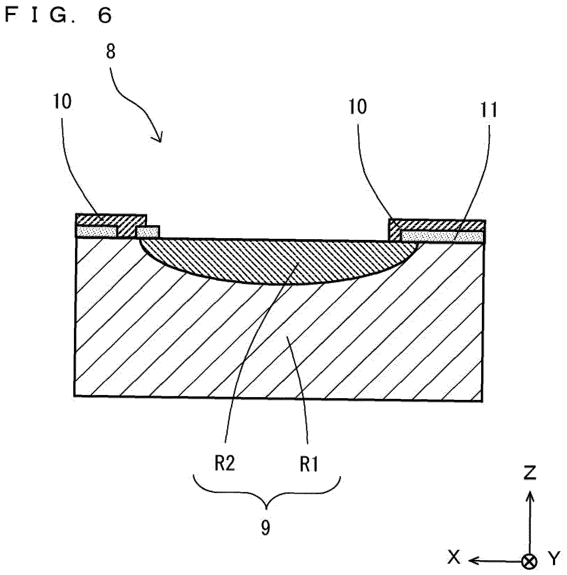

Figs. 4 to 6 schematically illustrate an example of the optical sensor 2 which is a part of the measurement apparatus 1. Fig. 4 is a cross sectional view from the same viewpoint as that in Fig. 2, and illustrates an enlarged view of the optical sensor 2. Fig. 5 and Fig. 6 are cross-sectional views each further enlarging part of the optical sensor 2 illustrated in Fig. 4.

The optical sensor 2 includes the light-emitting element 7 and the light receiving element 8 as described above, and emits light from the light-emitting element 7 and receives the light in the light receiving element 8. The light-emitting element 7 can emit the light when a current flows. The light-emitting element 7 may be a laser diode (LD), a light-emitting diode (LED) or the like, for example. The light receiving element 8 can receive the light and convert a light signal into an electrical signal. The light receiving element 8 may be a photo transistor (PT), a photo diode (PD) or the like, for example. The light-emitting element 7 in the present disclosure is an LED and the light receiving element 8 in the present disclosure is a PD. When the light-emitting element 7 is the LED, the light-emitting element 7 can reduce interference of a reflection light on the mirror member 53 compared with the case of the LD, for example.

The light receiving element 8 in the present disclosure includes a substrate 9 and a pair of first electrodes 10 located on a surface of the substrate 9. The substrate 9 in the present disclosure is a plate-like member of first conductivity type partially including a second region R2 of second conductivity type. In other words, the substrate 9 includes a region (first region R1) of first conductivity type and a region (second region R2) of second conductivity type having contact with the first region R1. As a result, a pn junction can be formed between the first region R1 and the second region R2, and the light reaching an interface of the pn junction can be converted into an electrical signal. Then, the electrical signal can be taken out via the pair of first electrodes 10.

In the present specification, "the first conductivity type" is "an n type" and "the second conductivity type" is "a p type". However, in the present invention, "the first conductivity type" is not limited to "the n type", but "the first conductivity type" may be "the p type". When "the first conductivity type" is "the p type", "the second conductivity type" is "the n type".

Each of the first region R1 and the second region R2 in the present disclosure includes part of the surface of the substrate 9. In other words, the surface of the substrate 9 is the first region R1 or the second region R2. One of the pair of first electrodes 10 of the light receiving element 8 is located on the first region R1, and the other one thereof is located on the second region R2.

The first region R1 and the second region R2 in the present disclosure include the upper surface of the substrate 9, and the pair of first electrodes 10 are located on the upper surface of the substrate 9 via an insulating layer 11. The insulating layer 11 is located on the upper surface of the substrate 9 to draw the pair of first electrodes 10. Then, a short circuit between the pair of first electrodes 10 can be prevented. The light receiving element 8 in the present disclosure can receive the light entering from the second region R2 on the upper surface of the substrate 9.

The second region R2 constitutes part of the substrate 9, and the first region R1 constitutes the other part thereof in the present disclosure. However, when the substrate 9 has the pn junction and functions as the light receiving element 8, the substrate 9 may include a region which is not the first region R1 and the second region R2.

The substrate 9 may be made up of a semiconductor material, for example. The substrate 9 in the present disclosure may be a substrate made of silicon (Si), for example. In the substrate 9 in the present disclosure, a Si wafer may be doped with an n type impurity to form the first region R1 and the part of the region may be doped with a p type impurity to form the second region R2. As a result, the n type first region R1 and the p type second region R2 are formed in the substrate 9. The n type impurity is phosphorus (P), nitrogen (N) or the like, for example. The p type impurity is boron (B), zinc (Zn) or the like, for example. The substrate 9, the first electrode 10 and the insulating layer 11 can be formed by a conventionally known method.

The light-emitting element 7 in the present disclosure includes a plurality of semiconductor layers 12 located on the upper surface of the substrate 9 and a pair of second electrodes 13 located on the plurality of semiconductor layers 12. As a result, a voltage is applied to the plurality of semiconductor layers 12 via the pair of second electrodes 13, thus part of the plurality of semiconductor layers 12 can be made to emit light. The plurality of semiconductor layers 12 and the second electrode 13 can be formed by a conventionally known method.

The optical sensor 2 may further include a wiring substrate 14 as illustrated in Fig. 4. The wiring substrate 14 is electrically connected to the light-emitting element 7, the light receiving element 8, and an external circuit, and can supply electrical power to the light-emitting element 7 and the light receiving element 8. It is sufficient that the light-emitting element 7 and the light receiving element 8 are mounted on the wiring substrate 14 with a bonding wire or the like via the substrate 9, for example.

The wiring substrate 14 may be formed to have a rectangular shape, for example. A resin substrate, a ceramic substrate or the like, for example, can be used for the wiring substrate 14. The wiring substrate 14 in the present disclosure is a resin substrate. In the present specification, the resin substrate indicates a substrate in which an insulating material in the wiring substrate 14 is made up of a resin material. The ceramic substrate indicates a substrate in which an insulating material in the wiring substrate 14 is made up of a ceramic material.

The wiring substrate 14 can be formed by alternately stacking an insulating layer and a wiring, for example, by a conventionally known method.

The optical sensor 2 further includes a light shielding body 15 and a lens member 16 as illustrated in Fig. 4. The light shielding body 15 can block stray light so that the light receiving element 8 does not receive unintended light from outside. The lens member 16 can guide the light from the light-emitting element 7 to the flow path 4 (mirror member 53) and guide the reflection light on the mirror member 53 to the light receiving element 8.

The light shielding body 15 and the lens member 16 can be formed by a conventionally known method.

The light shielding body 15 specifically includes a frame-like wall part 17 surrounding the light-emitting element 7 and the light receiving element 8 and a cover part 18 provided on an inner surface of the wall part 17 and located to cover a region surrounded by the wall part 17. That is to say, the light-emitting element 7 and the light receiving element 8 are housed in a region surrounded by the inner surface of the wall part 17 and a lower surface of the cover part 18. The light shielding body 15 includes a plurality of light passing parts 19 through which the light of the light-emitting element 7 passes. The light passing part 19 in the present disclosure is formed of a plurality of holes.

The light shielding body 15 may further include a light shielding wall 20 located between the plurality of light passing parts 19 to extend from the lower surface of the cover part 18 toward a region of the upper surface of the substrate 9 between the light-emitting element 7 and the light receiving element 8. The light shielding wall 20 can reduce a possibility that the light of the light-emitting element 7 directly enters the light receiving element 8.

The light shielding body 15 can be formed of a general-purpose plastic such as a polypropylene resin (PP) or a polystyrene resin (PS), an engineering plastic such as a polyamide resin (PA) or a polycarbonate resin (PC), a super engineering plastic such as a liquid crystal polymer, a metal material such as aluminum (Al) and titanium (Ti) or the like, for example.

The lens member 16 specifically includes a lens part 21 through which the light passes and a support part 22 supporting the lens part 21. The lens member 16 in the present disclosure is embedded into a region surrounded by the inner surface of the wall part 17 and the upper surface of the cover part 18 in the light shielding body 15 via the support part 22.

The lens member 16 can be formed of a transparent material. The lens member 16 can be formed of a plastic such as a thermosetting resin such as a silicone resin, an urethan resin and an epoxy resin, or a thermoplastic resin such as a polycarbonate resin and an acrylic resin, or sapphire, an inorganic glass and the like, for example.

The lens part 21 can collect and guide emitted light from the light-emitting element 7 and reflection light on an object. The lens part 21 includes a first lens 23 collecting the emitted light from the light-emitting element 7 and a second lens 24 collecting the reflection light from the object. A convex lens, a spherical lens, or a non-spherical lens, for example, can be used for each of the first lens 23 and the second lens 24 in the present disclosure.

The support part 22 can hold the lens part 21. The support part 22 can be formed into a plate-like shape, for example. It is applicable that the support part 22 is formed integrally with the lens part 21, thereby holding the lens part 21, or the first lens 23 and the second lens 24 in the lens part 21 are embedded into the support part 22 to hold the lens part 21.

The optical sensor 2 is disposed to be movable along a first direction (D1) corresponding to a direction of a Y axis direction of a planar surface with respect to a surface of the flow path device 3. As a result, the measurement apparatus 1 can irradiate the first flow path 5 and the second flow path 6 with the light in sequence while moving the optical sensor 2, thus can measure the intensity of the light on each path. The optical sensor 2 in the present disclosure is located on a lower side of the flow path device 3.

### (Flow path device)

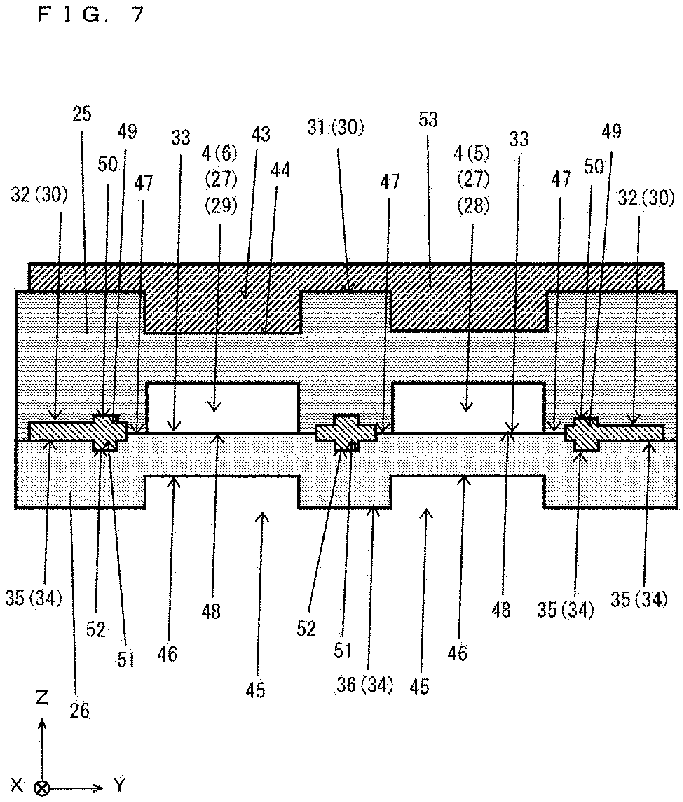

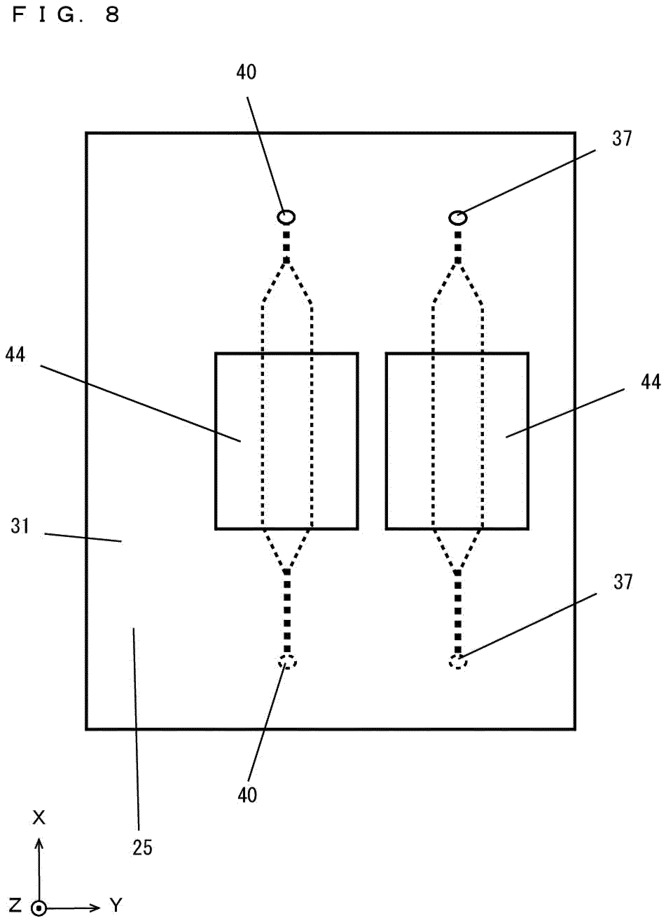

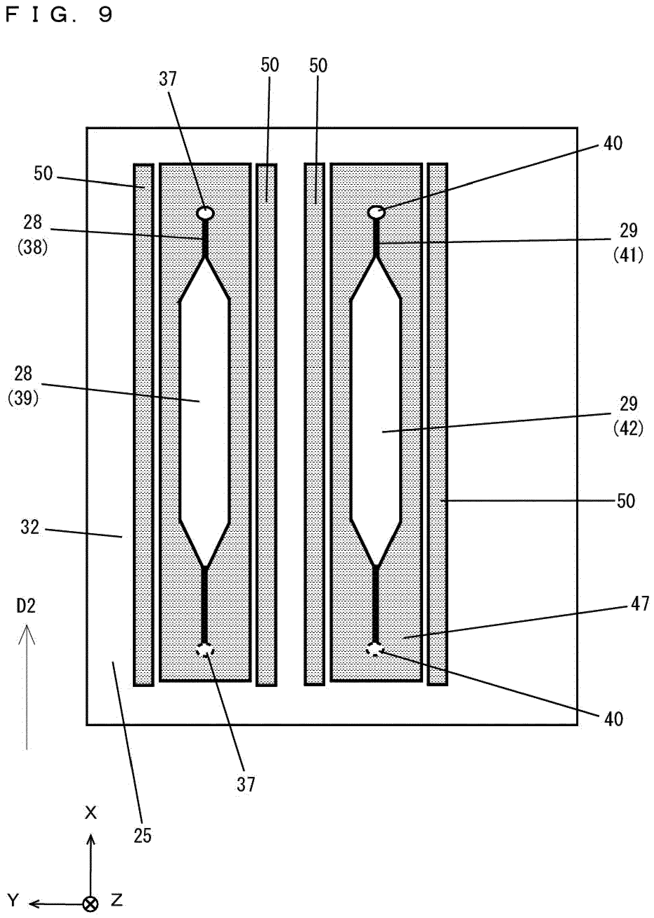

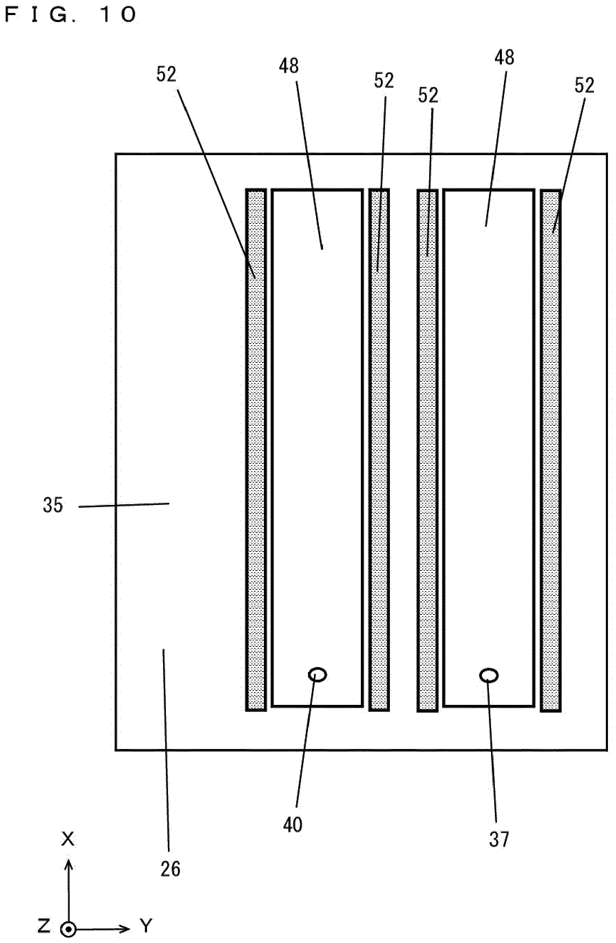

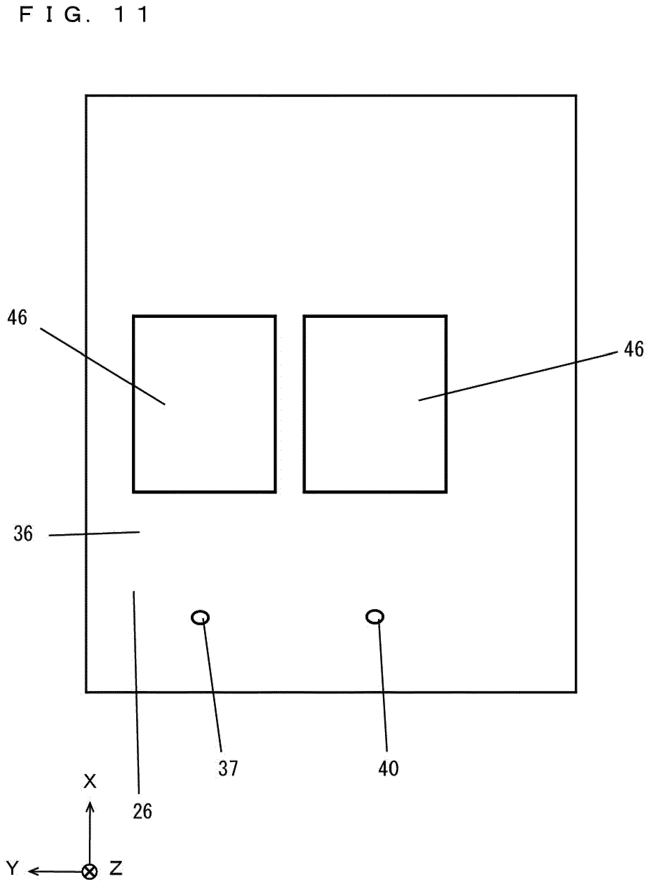

Fig. 7 to Fig. 11 schematically illustrate an example of the flow path device 3. Fig. 7 is a cross-sectional view of the flow path device 3 cut along a B-B line illustrated in Fig. 1. Fig. 8 is a top view of a first substrate 25 when seen from an upper side. Fig. 9 is a bottom view of the first substrate 25 when seen from a lower side. Fig. 10 is a top view of a second substrate 26 when seen from an upper side. Fig. 11 is a bottom view of the first substrate 26 when seen from a lower side.

The flow path device 3 is a device functioning as a flow path for measurement as described above. The flow path device 3 has translucency to measure the first particles with the optical sensor 2. The flow path device 3 needs to have the translucency in at least a portion necessary for measuring the first flow path 5 and the second flow path 6, thus the whole flow path device 3 needs not have the translucency.

The flow path device 3 includes the first substrate 25 and the second substrate 26 located on a lower side of the first substrate 25. The first substrate 25 has a groove 27 in a lower surface, and the second substrate 26 is located to cover the groove 27 of the first substrate 25 with an upper surface of the second substrate 26, thereby forming the flow path 4. That is to say, the flow path 4 is formed by an inner surface of the groove 27 of the first substrate 25 and a surface (an upper surface) of the second substrate 26. The groove 27 in the present disclosure includes a first groove 28 which is to be the first flow path 5 and a second groove 29 which is to be the second flow path 6.

The first substrate 25 and the second substrate 26 may be connected to each other via an adhesive agent, for example. A UV cure adhesive agent or a thermosetting adhesive agent can be used as an adhesive agent, for example.

The first substrate 25 may be a flat plate-like member, for example. The first substrate 25 includes a pair of first main surfaces 30 as upper and lower surfaces thereof. In the present disclosure, a first main surface 30 located in a positive direction of a Z axis in the pair of first main surfaces 30 is referred to as a first upper surface 31 (the other one of the pair of first main surfaces 30), and the first main surface 30 located in a negative direction of the Z axis is referred to as a first lower surface 32 (one of the pair of first main surfaces 30). The groove 27 of the first substrate 25 includes an opening 33 located on one of the pair of first main surfaces 30 (the first lower surface 32).

A material of the first substrate 25 may be, for example, glass, an acrylic resin, a polycarbonate resin, a polydimethylsiloxane (PDMS) resin or the like. The material of the first substrate 25 in the present disclosure is PDMS. A refraction index of the first substrate 25 is set to equal to or larger than 1.4 and equal to or smaller than 1.6, for example.

A width of the first groove 28 (the first flow path 5) of the first substrate 25 may be equal to or larger than 500 µm and equal to or smaller than 4000 µm, for example. A depth of the first groove 28 (the first flow path 5) may be equal to or larger than 100 µm and equal to or smaller than 1000 µm, for example. The first substrate 25 and the first groove 28 can be formed by a conventionally known method. A thickness (depth) of the first substrate 25 from a bottom surface of the first groove 28 is set to equal to or larger than 0.5 mm and equal to or smaller than 1 mm, for example. In the flow path device 3 in the present disclosure, the width and depth of the first groove 28 of the first substrate 25 are the same as a width and height of the flow path 4 (the first flow path 5).

The second substrate 26 may be a flat plate-like member, for example. The second substrate 26 includes a pair of second main surfaces 34 as upper and lower surfaces thereof. In the present disclosure, the second main surface 34 located in the positive direction of the Z axis in the pair of second main surfaces 34 is referred to as a second upper surface 35 (one of the pair of second main surfaces 34), and the second main surface 34 located in the negative direction of the Z axis is referred to as a second lower surface 36 (the other one of the pair of second main surfaces 34). The second substrate 26 is located so that the second upper surface 35 faces the first lower surface 32 of the first substrate 25. The second substrate 26 covers an opening 33 of the groove 27 in the first substrate 25.

A material of the second substrate 26 may be, for example, glass, an acrylic resin, a polycarbonate resin, a polydimethylsiloxane (PDMS) resin or the like. A refraction index of the second substrate 26 is set to equal to or larger than 1.4 and equal to or smaller than 1.6, for example. The material of the second substrate 26 in the present disclosure is glass. The second substrate 26 can be formed by a conventionally known method. A thickness of the second substrate 26 is set to equal to or larger than 0.5 mm and equal to or smaller than 1 mm, for example. The thickness of the second substrate 26 is set smaller than that of the first substrate 25.

Any of the first substrate 25 and the second substrate 26 may be located on an upper side, however, in the flow path device 3 in the present disclosure, the first substrate 25 is located on an upper surface of the second substrate 26 (second upper surface 35).

The first groove 28 can function as the first flow path 5. That is to say, at least the first fluid flows into the first groove 28. The first substrate 25 and the second substrate 26 include a plurality of first through holes 37 connected to the first groove 28. The plurality of first through holes 37 can function as a flow inlet through which the first fluid flows into the first flow path 5 and a flow outlet through which the first fluid flows from the first flow path 5.

The first groove 28 is formed into a band-like shape, and extends along a second direction (D2) corresponding to an X axis direction of the planar surface. The first groove 28 may further include a first planar part 38 connected to the first through hole 37 and a second planar part 39 connected to the first planar part 38 and having a width larger than the first planar part 38. A connection part between the first planar part 38 and the second planar part 39 is gradually widened. An irradiated region of the light-emitting element 7 in the optical sensor 2 is the second planar part 39.

The second groove 29 can function as the second flow path 6. That is to say, at least the second fluid flows into the second groove 29. The first substrate 25 and the second substrate 26 include a plurality of second through holes 40 connected to the second groove 29. The plurality of second through holes 40 can function as a flow inlet through which the second fluid flows into the second flow path 6 and a flow outlet through which the second fluid flows from the second flow path 6.

The second groove 29 is formed into a band-like shape, and extends along the second direction (D2) corresponding to the X axis direction of the planar surface. The second groove 29 may further include a third planar part 41 connected to the second through hole 40 and a fourth planar part 42 connected to the third planar part 41 and having a width larger than the third planar part 41. A connection part between the third planar part 41 and the fourth planar part 42 is gradually widened. An irradiated region of the light-emitting element 7 in the optical sensor 2 is the fourth planar part 42.

The fourth planar part 42 of the second groove 29 may have the same shape as the second planar part 39 of the first groove 28. A position of the fourth planar part 42 and a position of the second planar part 39 may be the same as each other in a thickness direction in the first substrate 25. The shape and position of the second flow path 6 may not be the same as those of the first flow path 5 as long as the second flow path 6 can function as the path for correction.

The second groove 29 is located adjacent to the first groove 28 in the Y axis direction. Specifically, the second groove 29 is located away from the first groove 28 in the first direction D1. A distance between the second groove 29 and the first groove 28 may be larger than a spot diameter of the light-emitting element 7, for example. As a result, the second groove 29 and the first groove 28 can be clearly recognized when scanned with the optical sensor 2, and the measurement position can be confirmed.

In the meanwhile, the distance between the second groove 29 and the first groove 28 may be smaller than a spot diameter of the light-emitting element 7, for example. As a result, a scan distance of the optical sensor 2 can be reduced, thus a measurement time can be reduced.

A width of the first groove 28 and a width of the second groove 29 in the present disclosure may be larger than a spot diameter of the light of the light-emitting element 7 entering the first groove 28 and the second groove 29. A depth, width, and length of the first groove 28 may be the same as those of the second groove 29 in the present disclosure. The width and length of the first groove 28 may be different from those of the second groove 29.

In the flow path device 3 in the present disclosure, the first substrate 25 further includes a first recessed portion 44 with an opening 43 located in the first upper surface 31. The first recessed portion 44 is located in the first upper surface 31 of the first substrate 25 to correspond to the first groove 28 and the second groove 29. In other words, in a perspective plan view of the first substrate 25, the first groove 28 and the second groove 29 overlap the first recessed portion 44. As a result, a region where the first groove 28 and the second groove 29 overlap the first recessed portion 44 is set to a measurement region of light, thus when the flow path device 3 is handled, an adhesion of a fingerprint to the measurement region can be reduced, for example, and a measurement accuracy can be improved.

A bottom surface of the first recessed portion 44 may be parallel to a bottom surface of the groove 27 (the first groove 28 and the second groove 29). It is sufficient that the first recessed portion 44 is located in at least the measurement region of the flow path 4. The first recessed portion 44 may be larger in size than at least the spot diameter of the optical sensor 2. It is sufficient that a planar shape and a cross-sectional shape of the first recessed portion 44 are rectangular shapes, for example. The first recessed portion 44 may have a length in a moving direction of the optical sensor 2 larger than the first groove 28 and the second groove 29, for example.

The second substrate 26 may further include a second recessed portion 46 with an opening 45 located in the second lower surface 36. The second recessed portion 46 is located in the second lower surface 36 of the second substrate 26 to correspond to the first groove 28 and the second groove 29. In other words, in a perspective plan view of the second substrate 26, the first groove 28 and the second groove 29 overlap the second recessed portion 46. As a result, when the flow path device 3 is handled, an adhesion of a fingerprint to the measurement region can be reduced, for example, and a measurement accuracy can be improved.

A bottom surface of the second recessed portion 46 may be parallel to the bottom surface of the groove 27 (the first groove 28 and the second groove 29). It is sufficient that the second recessed portion 46 is located in at least the measurement region of the flow path 4. The second recessed portion 46 may be larger in size than at least the spot diameter of the optical sensor 2. It is sufficient that a planar shape and a cross-sectional shape of the second recessed portion 46 are rectangular shapes, for example. The second recessed portion 46 may have a length in the moving direction of the optical sensor 2 larger than the first groove 28 and the second groove 29, for example.

The first substrate 25 may further include a plurality of first protruding portions 47 protruding from the first main surface 30 (the first upper surface 31) toward the second substrate 26. The plurality of first protruding portions 47 may be located along the openings 33 of the first groove 28 and the second groove 29 of the first substrate 25. The second substrate 26 may be located so that the second upper surface 35 has contact with the plurality of first protruding portions 47. As a result, when the first substrate 25 and the second substrate 26 are connected to each other using an adhesive agent, for example, an intrusion of the adhesive agent in the flow path 4 can be reduced, thus the measurement accuracy can be improved.

It is sufficient that the plurality of first protruding portions 47 have a planar surface in a top portion. As a result, the first substrate 25 and the second substrate 26 can be connected stably. It is sufficient that the plurality of the first protruding portions 47 have a band-like planar shape and a rectangular cross-sectional shape, for example. A height of the plurality of first protruding portions 47 may be equal to or larger than 0.05 mm and equal to or smaller than 0.1 mm, for example. A width thereof may be equal to or larger than 0.1 mm and equal to or smaller than 0.5 mm, for example.

The second substrate 26 may further include a second protruding portion 48 protruding from the second main surface 34 (the second upper surface 35) toward the first substrate 25. The second protruding portion 48 may be located to face the first groove 28 and the second groove 29 of the first substrate 25. The second protruding portion 48 may be located to partially face the first protruding portions 47. As a result, when the first substrate 25 and the second substrate 26 are connected to each other using an adhesive agent, for example, an intrusion of the adhesive agent in the flow path 4 can be reduced, thus the measurement accuracy can be improved.

It is sufficient that the second protruding portion 48 has a planar surface in a top portion. As a result, the first substrate 25 and the second substrate 26 can be connected stably. The second protruding portion 48 may have a width larger than the first groove 28 and the second groove 29. It is sufficient that the second protruding portion 48 has a band-like planar shape and a rectangular cross-sectional shape, for example. A height of the second protruding portion 48 may be equal to or larger than 0.05 mm and equal to or smaller than 0.1 mm, for example. A width thereof may be equal to or larger than 200 µm and equal to or smaller than 1500 µm, for example. The second substrate 26 may be a plurality of second protruding portions 48 facing the plurality of first protruding portions 47 respectively.

The bottom surface of the first recessed portion 44 may have a surface roughness smaller than that of the first upper surface 31. The bottom surface of each of the first groove 28 and the second groove 29 may have a surface roughness smaller than that of the first lower surface 32. The bottom surface of the second recessed portion 46 may have a surface roughness smaller than that of the second lower surface 36. The bottom surface of each of the first groove 28 and the second groove 29 may have a surface roughness smaller than that of the second upper surface 35.

Each of the bottom surface of the first recessed portion 44, the bottom surface of each of the first groove 28 and the second groove 29, and the bottom surface of the second recessed portion 46 may be a mirror surface.

The first substrate 25 may further include a plurality of third recessed portions 50 with an opening 49 located in the first lower surface 32. The plurality of third recessed portions 50 may be located along the first groove 28 and the second groove 29 away from the first groove 28 and the second groove 29. As a result, when the first substrate 25 and the second substrate 26 are connected to each other using an adhesive agent, for example, an intrusion of the adhesive agent in the flow path 4 can be reduced, thus the measurement accuracy can be improved.

The second substrate 26 may further include a plurality of fourth recessed portions 52 with an opening 51 located in the second upper surface 35. It is also applicable that the plurality of fourth recessed portions 52 do not face the first groove 28 and the second groove 29 but are located along the first groove 28 and the second groove 29. As a result, when the first substrate 25 and the second substrate 26 are connected to each other using an adhesive agent, for example, an intrusion of the adhesive agent in the flow path 4 can be reduced, thus the measurement accuracy can be improved.

The groove 27 in the present disclosure includes the first groove 28 and the second groove 29, and the above configuration can be applied to the first groove 28 and the second groove 29 in the similar manner.

The flow path device 3 in the present disclosure may further include the mirror member 53 located on the first upper surface 31 of the first substrate 25. In the present disclosure, the mirror member 53 may be located on the first recessed portion 44 of the first upper surface 31. The mirror member 53 can reflect part of light emitted from the light-emitting element 7 and passing through each of the first flow path 5 and the second flow path 6 toward the light receiving element 8.

The mirror member 53 may be a thin film-like member, for example. It is sufficient that a material of the mirror member 53 has a refraction index different from the first substrate 25. The mirror member 53 may be formed of a metal material such as aluminum or gold or a laminated body of a dielectric material such as a dielectric multilayer filter, for example. A refraction index of the mirror 53 is set to equal to or larger than 1.4 and equal to or smaller than 1.6, for example. The mirror member 53 can be formed on the first upper surface 31 of the first substrate 25 by an evaporation method, a sputtering method or the like, for example.

In the measurement apparatus 1 according to the present disclosure, it is also applicable that the optical sensor 2 is located in a position not receiving regular reflection light on the first lower surface 32 of the first substrate 25 with respect to the flow path device 3.

The present invention is not limited to the examples of the embodiments described above. That is to say, each constituent element of the examples of the embodiments described above may be appropriately combined, and various alternation and modifications, for example, should be possible within the scope of the present invention.

In the examples of the embodiments described above, there are the two first through holes 37, one of which is located in the first substrate 25 and the other one of which is located in the second substrate 26, however, the two of them may be located in the first substrate 25 or the second substrate 26.

In the examples of the embodiments described above, there are the two second through holes 40, one of which is located in the first substrate 25 and the other one of which is located in the second substrate 26, however, the two of them may be located in the first substrate 25 or the second substrate 26.

### Explanation of Reference Signs

- 1: measurement apparatus
- 2: optical sensor
- 3: flow path device
- 4: flow path
- 5: first flow path
- 6: second flow path
- 7: light-emitting element
- 8: light receiving element
- 9: substrate
- 25: first substrate
- 26: second substrate
- 27: groove
- 28: first groove
- 29: second groove
- 30: first main surface
- 31: first upper surface
- 32: first lower surface
- 33: opening
- 34: second main surface
- 35: second upper surface
- 36: second lower surface
- 43: opening
- 44: first recessed portion
- 45: opening
- 46: second recessed portion
- 47: first protruding portion
- 48: second protruding portion
- 49: opening
- 50: third recessed portion
- 51: opening
- 52: fourth recessed portion

## Claims

1. A flow path device, comprising:
a first substrate having a pair of first main surfaces and including a groove with an opening located in one of the pair of first main surfaces and a first recessed portion with another opening located in another one of the pair of first main surfaces, the first recessed portion overlapping the groove; and
a second substrate having a pair of second main surfaces, one of the pair of second main surfaces being located on a side of the one of the pair of first main surfaces of the first substrate to cover the opening of the groove.

2. The flow path device according to claim 1, wherein
the second substrate further includes a second recessed portion including a second another opening located in another one of the pair of second main surfaces and overlapping the groove.

3. The flow path device according to claim 1 or 2, wherein
the first substrate includes a plurality of first protruding portions protruding from the first main surface toward the second substrate and located along the groove, and
the second substrate is located so that the one of the pair of second main surfaces has contact with the plurality of first protruding portions.

4. The flow path device according to any one of claims 1 to 3, wherein
the second substrate includes a second protruding portion protruding from the second main surface toward the first substrate and located along the groove, and
the second protruding portion is located to partially face the plurality of first protruding portions.

5. The flow path device according to any one of claims 1 to 4, wherein
a surface roughness of the another one of the pair of first main surfaces is larger than a surface roughness of a bottom surface of the first recessed portion.

6. The flow path device according to any one of claims 1 to 5, wherein
a surface roughness of the another one of the pair of second main surfaces is larger than a surface roughness of a bottom surface of the second recessed portion.

7. The flow path device according to any one of claims 1 to 6, further comprising
an adhesive agent located between the first substrate and the second substrate, wherein
the adhesive agent is located between only the one of the first main surface and the one of the second main surface.

8. The flow path device according to any one of claims 1 to 7, further comprising
a pair of third recessed portions including an opening located in the one of the pair of first main surfaces and located along the groove.

9. The flow path device according to any one of claims 1 to 7, further comprising
a pair of fourth recessed portions including an opening located in the one of the pair of second main surfaces and located along the groove.

10. A measurement apparatus, comprising:
the flow path device according to any one of claims 1 to 9; and
an optical sensor facing the flow path device.
